# FASCICULE DE BREVET EUROPEEN

(11) **EP 3 337 137 B1**
(45) Date de publication et mention de la délivrance du brevet: **27.03.2024**
(21) Numéro de dépôt: 17207846.1
(22) Date de dépôt: 15.12.2017
(51) Int. Cl.: H04L 67/125, H04W 4/021, H04L 12/28, H04W 4/70, H04M 1/72415, H04M 1/72463, H04W 4/02

(54) **MISE EN OEUVRE CONDITIONNELLE D'UN SERVICE**
AN BEDINGUNGEN GEKNÜPFTE EINRICHTUNG EINES DIENSTES
CONDITIONAL IMPLEMENTATION OF A SERVICE

(30) Priorité: 16.12.2016 FR 1662600
(43) Date de publication de la demande: 20.06.2018
(73) Titulaire: Orange, 92130 Issy-les-Moulineaux (FR)
(72) Inventeur: GLOANEC, Simon, 92326 CHATILLON CEDEX (FR); MARCHAND, Hervé, 92326 CHATILLON CEDEX (FR)

(56) Documents cités:
- WO-A2-2017/120197
- US-A1- 2012 319 825
- US-A1- 2015 229 626
- US-A1- 2015 302 738
- US-B1- 6 563 430

## Description

### Domaine technique

L'invention se rapporte au domaine des télécommunications et plus particulièrement à la mise en oeuvre d'un service dans un réseau local de communications.

De manière générale, l'invention s'applique aux terminaux d'un tel réseau.

### Etat de la technique

Un réseau domestique est un réseau informatique qui relie ensemble, avec ou sans fils, les terminaux (ordinateurs, périphériques d'impression, de stockage, périphériques domotiques, etc.) d'une maison aptes à communiquer ensemble. Un réseau domestique comporte généralement un équipement routeur, aussi communément appelé passerelle, élément intermédiaire assurant la redirection, ou routage, des paquets de données entre les différents terminaux et réseaux qui lui sont connectés.

Dans le contexte d'un réseau domestique, et plus particulièrement d'un réseau domotique, un utilisateur a la possibilité d'exécuter un service donné sur un terminal donné disposant de caractéristiques propres (par exemple, commander une caméra, ouvrir une porte, etc.). Un tel terminal est appelé dans la suite un objet connecté (en anglais : IoT pour *Internet of Things*). Un tel service peut être vu comme un ensemble de composantes logicielles, ou programmes, associées à un ensemble de composantes matérielles. Le service peut être vu comme un ensemble d'actions que l'on enchaîne sur l'objet connecté. Les services rendus par un objet connecté peuvent être pilotés par les utilisateurs depuis un terminal, typiquement un smartphone. Ces smartphones peuvent être connectés à un réseau étendu, par exemple un réseau mobile, ou à un réseau local, par exemple en Wi-Fi.

Le contrôle de certains services peut être autorisé à distance. Cependant dans certains cas (pour des raisons de sécurité ou d'usage par exemple), il est souhaitable de limiter l'accès à certaines applications uniquement quand l'utilisateur est dans le périmètre du réseau domestique. Par exemple, un utilisateur peut à distance contrôler l'état d'une porte de garage (« est-ce que la porte est ouverte ou fermée ? ») mais il est préférable d'activer la porte uniquement quand il est en local (action d'ouvrir ou fermer la porte).

Il existe aujourd'hui des solutions pour limiter la mise en oeuvre de tels services à un utilisateur du réseau local. Cependant, pour définir si un utilisateur est en local ou à distance on s'appuie généralement sur le type d'accès réseau utilisé : si l'utilisateur est connecté sur un réseau mobile, il est considéré être à distance, si en revanche il est connecté (par exemple en Wi-Fi) sur la passerelle du réseau local il est considéré être en local. Ce type de solutions implique donc une action volontaire de l'utilisateur qui doit se connecter en Wi-Fi quand il souhaite accéder à des services autorisés pour un accès local. Cependant, un utilisateur peut préférer rester connecté uniquement à un réseau mobile tout en étant à son domicile : l'utilisateur ne souhaite pas forcément basculer en Wi-Fi, ou n'a pas les droits d'accès au réseau Wi-Fi, ou préfère rester connecté au réseau mobile parce que le débit en est plus élevé, etc.

Le document US 2012/0319825 décrit par ailleurs un système de contrôle d'un équipement utilisateur (par exemple un téléviseur) en fonction de la localisation du dispositif mobile mettant en oeuvre le service. Cependant, c'est le dispositif mobile (MUED) qui détermine lui-même sa localisation et la transmet à l'équipement (HUED). Cette opération sur le dispositif mobile est contraignante.

Le document US 2015/0229626 décrit un système dans lequel un appareil de gestion reçoit des données de localisation d'un dispositif mobile et détermine si les données de localisation sont dans une plage de distance prédéterminée d'un système de sécurité. De même, c'est le dispositif mobile qui doit fournir sa localisation.

L'invention offre une solution ne présentant pas les inconvénients de l'état de la technique.

### L'invention

A cet effet, selon un aspect fonctionnel, l'invention a pour objet un procédé de mise en oeuvre conditionnelle d'un service sur un objet connecté d'un réseau local, la mise en oeuvre dudit service étant associée sur ledit objet à au moins une donnée de localisation.

Les objets de l'invention sont définis dans les revendications indépendantes. Des modes de réalisation préférés correspondent aux revendications dépendantes.

Avantageusement selon le procédé, le service offert par l'objet connecté est mis en oeuvre, de manière conditionnelle, seulement si la donnée de localisation associée au service correspond à la localisation effective du terminal. Si aucune contrainte n'est associée au service, c'est-à-dire s'il peut être accessible par un terminal indifféremment de sa position, il peut être mis en oeuvre sans condition. Si, en revanche, une contrainte de localisation est imposée pour pouvoir bénéficier du service, par exemple si le terminal doit être situé à moins d'une certaine distance du réseau local (et donc du domicile de l'utilisateur), il est vérifié selon le procédé que le terminal qui demande le service respecte cette contrainte. Si c'est le cas, le service peut être mis en oeuvre par l'objet connecté. Sinon il n'est pas mis en oeuvre. La donnée de localisation indique de manière générale une localisation du terminal, en termes géographiques (le terminal est au Japon, aux Etats-Unis, en Bretagne, à Rennes, aux coordonnées GPS X: 48.083328 Y: -1.68333, etc.) ou de distance (le terminal est à 100 km de la maison, à 30 km de l'objet, à 100 m de la passerelle du réseau local, etc.). Cette mise oeuvre conditionnelle améliore la sécurisation de l'accès à l'objet connecté, certains objets devant être de préférence manipulés par un utilisateur qui n'est pas trop éloigné d'eux, et améliore de surcroît la sécurité de la communication entre le terminal et l'objet car une communication locale est plus difficile à intercepter qu'une communication longue distance.

En particulier, l'invention permet de mettre en oeuvre un service sur un objet connecté si le terminal qui requiert le service se trouve dans la portée du réseau local. Par « portée du réseau local » on entend la zone de couverture du réseau local, autrement dit la zone dans laquelle le terminal est apte à dialoguer avec la passerelle de service. Si le terminal n'est pas dans la portée du réseau, le service ne sera pas mis en oeuvre. Naturellement, la détermination de ce que le terminal est dans la portée du réseau local ne signifie pas que le terminal est nécessairement connecté en Wi-FI à la passerelle de service.

Par « service », on entend ici un ensemble d'actions à effectuer sur au moins un objet connecté du réseau.

On notera que le procédé s'applique à n'importe quel objet connecté existant, sans modification du hardware existant, en lui adjoignant simplement un programme logiciel apte à exécuter les étapes du procédé.

On notera aussi que l'objet connecté peut recevoir la requête de service en provenance du réseau local ou non. Notamment, le réseau mobile peut avantageusement être mis à profit pour transmettre la requête du terminal vers l'objet, si l'utilisateur n'a pas souhaité se connecter (en Wi-Fi) au réseau local.

Selon d'autres modes de mise en oeuvre de l'invention :
- l'objet connecté prend l'initiative d'émettre une requête vers la passerelle pour recevoir en échange une donnée de localisation du terminal qui a émis la demande de mise en oeuvre du service. Ceci évite à la passerelle d'émettre régulièrement ce message, et permet par ailleurs à l'objet d'émettre la requête seulement dans les cas jugés pertinents, c'est-à-dire quand la mise en oeuvre est effectivement conditionnelle. Il est en effet inutile d'émettre une telle requête (et de recevoir une réponse) si la mise en oeuvre du service est systématique, indépendamment de la localisation du terminal.
- la donnée de localisation associée à un service rendu par l'objet est enregistrée dynamiquement sur l'objet. Par exemple, si cet objet est une porte, il peut être fermé par un terminal qui se trouve n'importe où mais ouvert seulement par un terminal qui se trouve à Rennes. Cette configuration peut être avantageusement changée au cours du temps, par la répétition des étapes d'acquisition et d'enregistrement de la donnée de localisation associée au service.
- la donnée de localisation indique de surcroît une distance du terminal à la passerelle domestique, ou à un terminal quelconque du réseau, voire à l'objet connecté lui-même. Directement ou indirectement, la donnée de localisation indique donc la distance entre le terminal qui requiert le service et l'objet qui rend le service. La donnée de localisation associée au service indique une distance maximale autorisée. Si la distance entre le terminal et par exemple la passerelle est supérieure à la distance maximale autorisée pour le service, celui-ci n'est pas mis en oeuvre. Ce mode de réalisation permet donc d'autoriser ou interdire certaines opérations sur l'objet connecté selon que l'objet se trouve en-deçà ou au-delà d'une certaine distance dans le réseau local.

Selon un autre aspect fonctionnel, l'invention concerne également un procédé de gestion de la localisation d'un terminal d'un réseau local sur un dispositif du réseau local, dit dispositif de gestion de la localisation, d'une passerelle de service:
Un mode de réalisation est détaillé à l'appui de la revendication indépendante 5 et de ses dépendantes. D'autres modes de réalisation sont fournis à titre d'exemple.

Ce procédé possède les mêmes avantages que ceux décrits en relation avec le procédé de mise en oeuvre conditionnelle. Un objet qui a reçu une requête de service d'un terminal mobile (pas nécessairement connecté au réseau local) peut interroger la passerelle, pour obtenir l'information, ou donnée, de localisation du terminal, afin de décider s'il peut ou non mettre en oeuvre le service. On notera que cette information ne se trouve pas nécessairement sur la passerelle elle-même, du moment qu'elle lui est accessible (par exemple dans le *cloud* ou sur un terminal du réseau de type PC, disque dur, etc.)

La réception d'un message en provenance du terminal permet à la passerelle de calculer la localisation du terminal. Le message peut porter l'information explicitement (en indiquant par exemple en paramètre la localisation géographique du terminal) ou implicitement (par simple détection du message, ce qui indique que le terminal est bien dans la portée de la passerelle, ou en mesurant par exemple la puissance du signal reçu afin d'en déduire une indication de distance.

Selon d'autres modes de réalisation :
- le message est diffusé sur un canal distinct du réseau local (Wi-Fi ou ADSL), par exemple sur un canal Bluetooth (BLE, Zigbee, etc.). Ceci évite au porteur du terminal d'allumer le module Wi-Fi pour se connecter au réseau local, pour des raisons de sécurité, de simplicité ou d'économies d'énergie. Ceci est vrai en particulier s'il communique avec l'objet connecté via le réseau mobile. Si le message Bluetooth est reçu par la passerelle, cela signifie que le terminal est bien dans la portée du réseau local, puisque la portée du Bluetooth, en particulier BLE, est inférieure à celle du réseau local.
- La donnée de localisation du terminal indique en outre une distance entre le terminal et le dispositif de localisation.

Ce procédé est particulièrement simple à mettre en oeuvre puisque la passerelle domestique connaît généralement les appareils qui lui sont connectés (qui se trouvent donc dans la portée du réseau local).

L'invention sera mieux comprise à la lecture de la description qui suit, donnée à titre d'exemple et faite en référence aux dessins annexés.

### Les figures:

La figure 1 illustre le contexte général d'un mode de réalisation de l'invention.
La figure 2 représente un bloc diagramme d'un objet connecté selon un mode de réalisation de l'invention.
La figure 3 représente un bloc diagramme d'une passerelle domestique selon un mode de réalisation de l'invention.
La figure 4 représente les échanges entre une passerelle domestique, un smartphone et un objet connecté du réseau local selon un mode de réalisation de l'invention.

### Description détaillée d'un exemple de réalisation illustrant l'invention

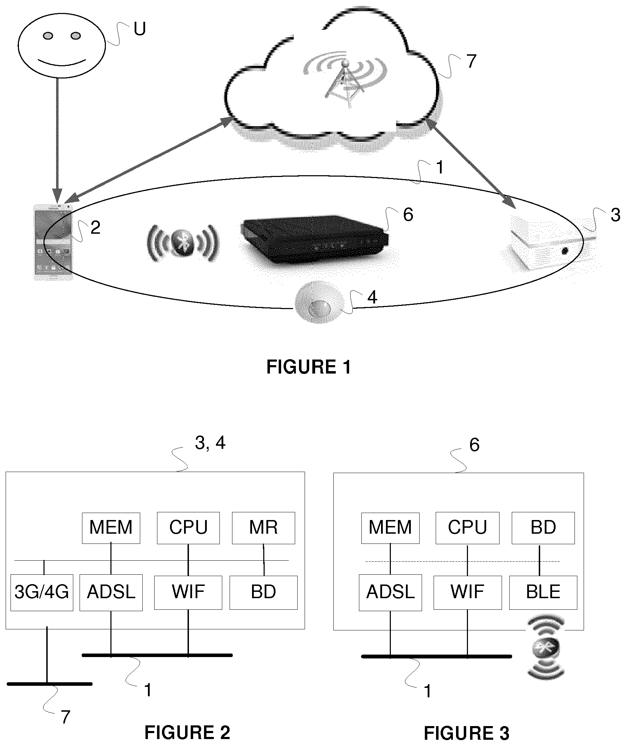

La figure 1 illustre le contexte général d'un mode de réalisation de l'invention.

Le réseau local (1) est par exemple un réseau local IP (Internet Protocol). Le réseau (1) comporte selon cet exemple un élément de gestion du réseau (6) appelé dans la suite « passerelle de service » ou plus simplement « passerelle », et des équipements terminaux (3,4) connectés sur ce réseau local, aptes à établir des communications entre eux via la passerelle. La passerelle peut également être considérée au sens large comme un terminal du réseau local. Il s'agit par exemple d'une passerelle domestique connue sous la désignation commerciale de « Livebox ». Elle comporte une fonction de communication Wi-Fi, ou point d'accès (en anglais : *Access Point*), qui lui permet de communiquer avec les terminaux du réseau sans fil. Alternativement, l'équipement routeur pourrait être un routeur intelligent, un hub, etc. Selon cet exemple de réalisation, la passerelle comporte en outre un second module de communication permettant de recevoir des messages diffusés sur un canal radio de courte portée, comme par exemple le Bluetooth, Zigbee, etc. On rappelle que le Bluetooth est une technologie de réseau de faible portée permettant de relier des appareils entre eux sans liaison filaire. Bluetooth permet de transmettre des données ou de la voix entre des équipements équipés de modules radio, sur un rayon, ou portée, de l'ordre d'une dizaine de mètres à un peu moins d'une centaine de mètres et avec une faible consommation électrique. Le Bluetooth utilisé dans cet exemple de réalisation est de préférence de type Bluetooth Low Energy, ou BLE, caractérisé par une consommation très faible et portée de l'ordre du mètre (3 ou 4 au maximum), ce qui est suffisant pour le type de transactions visées. Le terme Wi-Fi recouvre pour sa part un ensemble de normes de la spécification IEEE 802.11 pour des communications sans fils pouvant aller jusqu'à quelques centaines de mètres. Le terme Zigbee désigne un ensemble de protocoles de communications de haut niveau utilisant des transmissions radio à faible consommation, basés sur la norme IEEE 802.15.4.

Le terminal 3 est un terminal quelconque du réseau local, connecté à la passerelle de service : un capteur de lumière, un détecteur de mouvement, une lampe, une tablette numérique, un chauffage électrique connecté, un fer à repasser, un store, un réfrigérateur, une porte de garage, etc. De tels terminaux sont aussi appelés objets connectés, ou IOT selon leur dénomination anglo-saxonne. Ces terminaux sont de nature hétérogène. Ils peuvent, par exemple, différer par leur système d'exploitation (Windows, Linux, Android, etc.), leur type de connexion au réseau local (Ethernet, Wi-Fi, Bluetooth, etc.), les actions dont ils sont capables (mesurer la luminosité, détecter un mouvement, allumer la lampe, ouvrir la porte, déclencher l'enregistrement d'un film, allumer le chauffage, etc.)
le terminal 4 est selon cette exemple une caméra connectée.

Le terminal 2 est selon cet exemple un *smartphone* de l'utilisateur U. Selon le choix de l'utilisateur, le smartphone est connecté à un réseau mobile (7), par exemple UMTS, 4G, 5G, etc. et/ou au réseau local, par exemple en Wi-FI, lorsque le smartphone est dans la portée du réseau local. La portée du réseau dépend naturellement du type de réseau et du canal de communication radio utilisé. Une application spécifique (Android, IOS, etc.) peut être installée sur le smartphone pour requérir un service d'un ou plusieurs objets connectés (3, 4) : augmenter la luminosité, allumer le chauffage, ouvrir la porte, etc.

Il est souhaitable que certaines de ces actions ne soient réalisées que lorsque l'utilisateur est dans la portée du réseau local : il est rare de souhaiter ouvrir la porte du garage lorsqu'on est éloigné du domicile ; il est dangereux d'allumer le fer à repasser si on n'est pas à la maison, etc.

Selon l'état de la technique connue, certaines applications ne s'exécutent de fait que lorsque le smartphone est connecté en local, notamment dans le cas d'une application dédiée à une communication Wi-FI, Bluetooth, Zigbee, etc. On s'assure ainsi indirectement que c'est bien l'un des utilisateurs du réseau local (et donc du domicile) qui contrôle l'objet, et non pas un intrus ; on s'assure par ailleurs que l'utilisateur, même s'il est légitime, ne déclenche pas par erreur une action non souhaitable sur l'un des objets.

Cependant, dans un tel cas, l'utilisateur est contraint de se connecter en local pour pouvoir exécuter son application et par là lancer le service. Or l'utilisateur peut ne pas souhaiter se connecter en local, pour des raisons de sécurité, d'économie d'énergie, de problèmes d'accès ou de bande passante (la bande passante d'un réseau 4G étant souvent plus élevée que celle d'un réseau Wi-FI, l'utilisateur peut rechigner à se connecter en Wi-FI au réseau local lorsqu'il rentre à la maison).

L'invention propose donc d'associer aux services offerts par les objets connectés une notion de localisation impliquant une notion de proximité. On entend ici que l'utilisateur est à proximité lorsqu'il est dans la portée du réseau local. On peut dire aussi qu'il est « en local ». Dans le contexte de ce mode de réalisation de l'invention, il peut commander l'objet « porte » pour une ouverture et une fermeture lorsqu'il est en local, mais seulement pour la fermeture lorsqu'il est à distance.

La solution proposée consiste à s'appuyer sur un protocole de diffusion locale (comme le Bluetooth) pour avertir la passerelle de la présence en local de l'utilisateur. L'utilisateur peut donc continuer à communiquer uniquement par le biais du réseau mobile, sans nécessité de se connecter au réseau local.

La figure 2 représente schématiquement une architecture d'un objet connecté, ou IoT (3,4), implémentant un mode de réalisation de la mise en oeuvre d'un service selon l'invention.

L'objet comprend, classiquement, des mémoires (MEM) associées à un processeur (CPU). Les mémoires peuvent être de type ROM (de l'anglais Read Only Memory) ou RAM (de l'anglais Random Access Memory) ou encore Flash. Il communique avec le réseau local via le module Ethernet (ADSL) et/ou le module WI-FI pour une communication avec ou sans fils. Il communique avec un terminal qui en prend le contrôle pour lui demander un service par le biais d'un réseau Wi-FI ou mobile (3G/4G). Le terminal comprend en outre, conformément à l'invention, plusieurs modules matériels et/ou logiciels, lui permettant de stocker les listes de services (actions) qui lui sont applicables, en association avec un indicateur de localisation, d'évaluer les ordres reçus et de les mettre en oeuvre. Par exemple sur la figure 2, cette fonction est rendue par les modules suivants :
- un module BD de base de données, qui sert notamment à stocker une table des services (actions) réalisables sur l'objet, à associer avec une notion de « localisation » de l'utilisateur (en local ou distant). On notera que cette base peut faire partie de la mémoire MEM, ou alternativement être rattachée à un disque local ou tout autre support de données, interne ou externe.
- un module logiciel MR apte à évaluer une commande reçue du réseau (par exemple en provenance du *smartphone*) et prendre un certain nombre d'actions en conséquence, pour rendre ou non un service requis.

La figure 3 représente schématiquement une architecture d'une passerelle de service (6) implémentant un mode de réalisation de l'enregistrement de la localisation d'un terminal selon l'invention.

La passerelle (6) comprend, classiquement, des mémoires (MEM) associées à un processeur (CPU). Les mémoires peuvent être de type ROM (de l'anglais Read Only Memory) ou RAM (de l'anglais Random Access Memory) ou encore Flash. Elle communique avec le réseau local via le module Ethernet (ETH) d'une part et éventuellement un module WI-FI pour une communication sans fils. Elle est aussi équipée, selon ce mode de réalisation, d'un module Bluetooth Low Energy (BLE) qui lui permet de recevoir des messages de la part d'un terminal (2).

Une partie de la mémoire MEM est reliée au point d'accès WIF et stocke, entre autres, classiquement, les paramètres d'identification et d'association des terminaux domestiques au point d'accès WIF (table d'identifiants comprenant les identifiant uniques des terminaux domestiques qui ont déjà été autorisés à accéder au réseau domestique via le point d'accès, éléments de routage, etc.) et selon l'invention, une table d'identifiants comprenant les identifiant des terminaux présents dans la portée du réseau local, plus éventuellement une information de localisation plus précise du terminal.

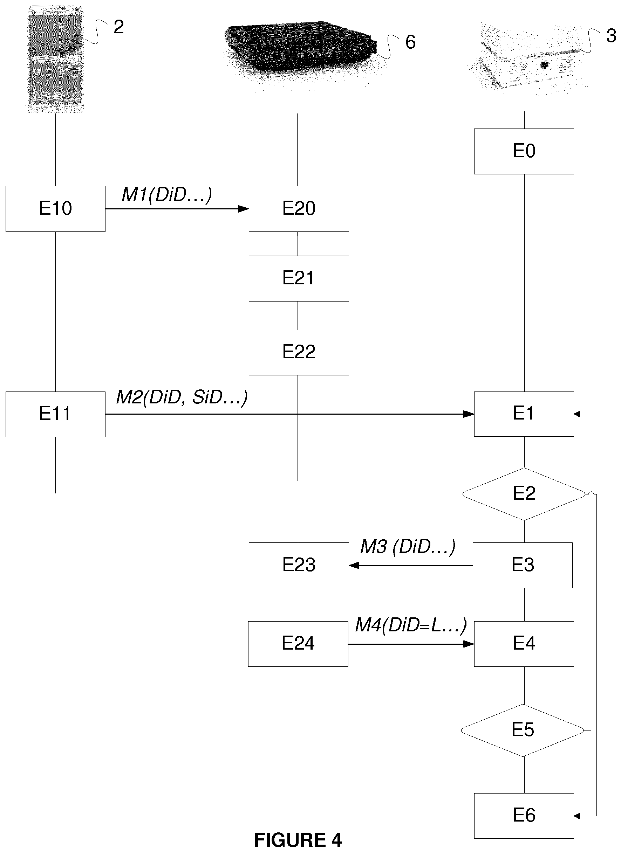

La figure 4 représente sous forme d'organigramme la mise en oeuvre d'un service sur un objet connecté, selon un mode de réalisation de l'invention.

On reprend ici le service évoqué à l'appui de la figure 1, à savoir : l'utilisateur U souhaite ouvrir la porte de son garage pour sortir de la maison, en commandant l'objet « porte » (3) via son smartphone (2 Par ailleurs il ne faut pas qu'il puisse ouvrir par erreur la porte (3) lorsqu'il est à distance de son domicile. ). Il peut être ou non connecté au réseau Wi-Fi. Préférentiellement, il n'est pas connecté au réseau Wi-Fi et communique avec la passerelle via son module Bluetooth (BLE).

La mise en oeuvre de ce mode de réalisation de l'invention comporte les étapes suivantes.

Lors d'une étape E0 initiale, l'utilisateur définit pour l'objet connecté les services accessibles en local ou à distance. Une table est constituée dans la mémoire du terminal. Elle peut prendre par exemple la forme schématisée ci-dessous :

**Table 1 : exemple de table (T) de correspondance en mémoire de l'objet connecté**

| *Service* | *Action* | *Local(L)*/ *Distant(D)* | *Action résultante* |
|---|---|---|---|
| A | Test porte | D | Message indiquant si la porte est ouverte/fermée |
| B | Ouverture porte | L | Ouverture de la porte |
| C | Fermeture porte | D | Fermeture de la porte |

Lors d'une étape E10, Le *smartPhone* diffuse en permanence et avec une certaine période (par exemple toutes les 60 secondes) un message M1 (ou premier message) comportant un identifiant unique du terminal (DiD). Cette diffusion peut être permanente (dès que le module Bluetooth est activé sur le smartphone, par exemple) ou déclenchée par un événement (reconnaissance de la passerelle domestique par le smartphone, activation manuelle ou automatique du procédé lorsque le smartphone « rentre à la maison », etc.)

Lors d'une étape E20, si le terminal est dans sa portée (selon cet exemple dans la portée de la liaison Bluetooth), la passerelle reçoit l'identifiant DiD du terminal. Elle obtient ou calcule une donnée de localisation du terminal lors d'une étape E21. Cette étape peut être réalisée en utilisant toute méthode connue à la portée de l'homme du métier, par exemple :
- localisation géographique du terminal (basée sur une obtention des coordonnées GPS, etc.) ;
- détection de la présence dans la portée du réseau local :
   ▪ par exemple si la passerelle reçoit un message Wi-Fi, cela signifie que le terminal est dans la portée du réseau Wi-Fi ;
   ▪ alternativement, la passerelle peut simplement consulter en mémoire de la table des appareils qui lui sont connectés (il est bien connu qu'une passerelle domestique conserve en permanence une table des terminaux qui lui sont connectés) ;
- détection de la sortie du réseau local : si la passerelle ne reçoit plus de message du terminal pendant un temps défini (par exemple 120 secondes) elle considère que le terminal n'est plus présent dans le réseau, en d'autres termes il est à une distance supérieure de la portée du réseau Wi-Fi/Bluetooth ;
- réception d'un message porteur explicitement de la donnée (par exemple, paramètre du message M1 indiquant que le terminal est « en local ») ;
- réception d'un message porteur implicitement de la donnée : par exemple, si le message est reçu en Wi-Fi cela signifie que la distance entre le terminal et la passerelle est inférieure à la portée du réseau Wi-FI (quelques dizaines de mètres) ; si le message est reçu en Bluetooth (BLE), cela signifie que la distance entre le terminal et la passerelle est inférieure à la portée de la liaison Bluetooth (quelques mètres) ; si le message est reçu en NFC, cela signifie que la distance entre le terminal et la passerelle est inférieure à la portée du champ proche (quelques centimètres) ; etc. Par ailleurs, si le message est reçu, la puissance du signal associée peut être un indicateur de la distance à laquelle se trouve le terminal ;
- émission de messages périodiques vers le terminal (*ping,* message BLE, etc.) et attente d'une réponse ;
- etc.

Puis au cours d'une étape E22, la passerelle met à jour sa table de présence en mémoire, c'est-à-dire qu'elle mémorise l'information, ou donnée, de localisation du terminal, en relation avec un identifiant dudit terminal ;

**Table 2 : exemple de table de présence en mémoire de la passerelle.**

| *Terminal* | *Présent en local* | *Distance* |
|---|---|---|
| 3 | Oui | 3 m |
| | | |
| 4 | Oui | 10 m |

Lors d'une étape E11, le *smartphone* envoie à travers le réseau mobile (ou le Wi-Fi s'il est connecté à la passerelle en Wi-Fi) une requête (ou message M2) à l'objet connecté pour un service SiD en précisant dans la requête son identifiant (DiD).

L'objet connecté reçoit la requête lors d'une étape E1, récupère les identifiants du service demandé (SiD) et du terminal émetteur (DiD), et accède à sa table des services.

Puis lors d'une étape E2, l'objet connecté effectue un test pour connaître les conditions d'accès au service. Si le service est accessible uniquement en local, l'objet connecté interroge la passerelle au cours d'une étape E3 pour savoir si le terminal est présent en local, en émettant un message M3 sur le réseau local, à destination de la passerelle, en précisant l'identifiant (DiD) du terminal qui a émis la requête de service. Si ce n'est pas le cas, c'est-à-dire si le service peut être rendu sans condition, il n'est pas nécessaire d'interroger la passerelle puisque le service peut être rendu quelle que soit la localisation (distante ou locale) du *smartphone.* Dans ce cas le procédé peut être suivi directement de l'étape E6 de mise en oeuvre du service.

Alternativement à l'étape E2, on peut imaginer que l'objet interroge systématiquement la passerelle (que le service soit associé à un identifiant local ou non). Dans ce cas il devra vérifier par la suite l'adéquation entre la localisation du terminal et l'attribut, ou donnée, de localisation du service.

La passerelle reçoit le message M3 lors d'une étape E23, interroge sa table de services en mémoire et répond lors d'une étape E24 à l'objet connecté. La passerelle répond à travers un protocole prédéfini, basé par exemple sur la norme UPnP. On rappelle que la norme UPnP a pour but de permettre à des terminaux de se connecter aisément et de communiquer simplement au sein d'un réseau local. Elle constitue un ensemble de protocoles de communication basés sur le protocole IP et promulgué par le forum de normalisation UPnP (« UPnP Forum »). Ce message peut prendre toute forme, à condition qu'il comprenne l'identifiant du terminal et sa donnée de localisation ; il est noté : M4 (DID=L) sur la figure, pour signifier que le terminal dont l'identifiant est *DiD* est présent en local.

Ce message est reçu par l'objet lors d'une étape E4, puis analysé lors d'une étape E5 par l'objet connecté : si la donnée de localisation associée au service exige un terminal local, et si le terminal requérant le service est effectivement en local, la requête est acceptée et le service mis en oeuvre au cours de l'étape E6 (ouverture de porte, fermeture, test, etc.) ; sinon elle est refusée et le procédé sur l'objet peut revenir par exemple à l'étape E1 en attente d'une nouvelle requête.

Il va de soi que les modes de réalisation décrits ci-dessus ont été donnés à titre purement indicatif et nullement limitatif, et que de nombreuses modifications peuvent être facilement apportées par l'homme de l'art sans pour autant sortir du cadre de l'invention tel que défini par les revendications.

## Revendications

1. Procédé de mise en oeuvre conditionnelle d'un service (A, B, C) sur un objet (3) connecté d'un réseau local (1) apte à communiquer avec un dispositif du réseau local, dit dispositif de gestion de la localisation d'une passerelle dudit réseau local, la mise en oeuvre dudit service étant associée sur ledit objet à au moins une donnée de localisation indiquant si un terminal requérant le service doit être dans la portée du réseau local (L/D), le procédé comportant les étapes suivantes sur l'objet :
A. Réception (E1) d'une requête (M2) de mise en oeuvre du service en provenance d'un terminal, ladite requête comportant au moins l'identifiant du service (SiD) et un identifiant dudit terminal (DiD) ;
B. transmission au dispositif de gestion d'une requête (E3, M3) de localisation dudit terminal, ladite requête comportant ledit identifiant du terminal (DiD) ;
C. réception (E4) d'un message de réponse du dispositif de gestion (M4) comportant au moins une donnée de localisation du terminal (L/D) indiquant si le terminal est présent (L/D) dans la portée du réseau local ;
D. mise en oeuvre (E6) du service sur l'objet si ladite donnée de localisation du terminal indique que le terminal est présent (L/D) dans la portée du réseau local, et refus de mise en oeuvre du service sur l'objet si ladite donnée de localisation du terminal indique que le terminal n'est pas présent (L/D) dans la portée du réseau local.

2. Procédé de mise en oeuvre conditionnelle d'un service (A) selon la revendication 1, **caractérisé en ce qu'**il comporte en outre, préalablement à la réception (E4) d'un message (M4) comportant au moins une donnée de localisation du terminal (L/D, les étapes de :
• évaluation (E2) de la donnée de localisation (L/D) associée à la mise en oeuvre du service, et selon les résultats de l'évaluation :
• transmission (E3) au dispositif de gestion de la requête (M3) de localisation du terminal (2), comportant au moins ledit identifiant dudit terminal.

3. Procédé de mise en oeuvre conditionnelle d'un service (A) selon la revendication 1, **caractérisé en ce qu'**il comporte en outre les étapes suivantes :
• acquisition (E0) de la donnée (L/D) de localisation à associer à la mise en oeuvre du service (A) ;
• enregistrement (E0) de la donnée de localisation associée à la mise en oeuvre du service.

4. Procédé de mise en oeuvre conditionnelle d'un service (A) selon la revendication 1, **caractérisé en ce que** :
• la donnée de localisation du terminal reçue indique une distance du terminal (2) à un second terminal (6) du réseau local ;
• la donnée de localisation associée à la mise en oeuvre du service indique une distance maximale dudit terminal (2) audit second terminal (6) du réseau local.

5. Procédé de gestion de la localisation d'un terminal (2) d'un réseau local (1), le procédé comportant les étapes suivantes sur un dispositif du réseau local, dit dispositif de gestion de la localisation (6), d'une passerelle dudit réseau local :
• obtention(E21, M1) d'une donnée (L/D) de localisation dudit terminal indiquant si le terminal est présent (L/D) dans la portée du réseau local, comportant :
• une sous-étape de réception d'un message (E20, M1) en provenance dudit terminal, comportant un identifiant du terminal, et de détection de la présence du terminal dans la portée du réseau local sur réception du message (E20, M1) ; ou
• une sous-étape de détection de sortie de la portée du réseau local en cas d'absence de réception de message du terminal pendant un temps défini.
• enregistrement (E22) de la donnée (L/D) de localisation dudit terminal en association avec ledit identifiant (DiD) ;
• réception en provenance d'un objet connecté du réseau local d'une requête (E23, M3) de localisation dudit terminal, ladite requête comportant un identifiant du terminal (DiD) ;
• émission vers l'objet connecté d'une réponse (E24, M4) comprenant la donnée de localisation dudit terminal.

6. Procédé de gestion de la localisation selon la revendication 5, **caractérisé en ce que** ledit message (M1) est diffusé sur un canal distinct du réseau local.

7. Procédé de gestion de la localisation selon la revendication 5, **caractérisé en ce que** la donnée de localisation du terminal (L/D) indique une distance entre le terminal et le dispositif de gestion de la localisation.

8. Objet connecté (3, 4) d'un réseau local (1), apte à communiquer avec un dispositif du réseau local, dit dispositif de gestion de la localisation, d'une passerelle dudit réseau local, et à mettre en oeuvre conditionnellement un service (A, B, C), la mise en oeuvre dudit service étant associée sur ledit objet à au moins une donnée de localisation (L/D) indiquant si un terminal requérant le service doit être dans la portée du réseau local, ledit objet comprenant les modules suivants :
• un module de réception (3G, ADSL, WIF) d'une requête (M2) de mise en oeuvre du service en provenance d'un terminal (2), ladite requête comportant au moins l'identifiant du service (SiD) et un identifiant dudit terminal (DiD) ;
• un module de transmission au dispositif de gestion d'une requête (M3) de localisation dudit terminal, ladite requête comportant ledit identifiant du terminal (DiD) ;
• un module de réception (WIF) d'un message (M4) de réponse du dispositif de gestion, comportant au moins une donnée de localisation dudit terminal (L/D) indiquant si le terminal est présent (L/D) dans la portée du réseau local ;
• un module de mise en oeuvre (MR) du service sur l'objet si ladite donnée de localisation du terminal indique que le terminal est présent (L/D) dans la portée du réseau local, et de refus de mise en oeuvre du service sur l'objet si ladite donnée de localisation du terminal indique que le terminal n'est pas présent (L/D) dans la portée du réseau local..

9. Dispositif (6) d'une passerelle de service d'un réseau local, pour la gestion de la localisation d'un terminal dans le réseau local (1), ledit dispositif comportant :
• un module d'obtention (ADSL, WIF, BT, MEM) d'une donnée (L) de localisation d'un terminal indiquant si le terminal est présent (L/D) dans la portée du réseau local, comportant :
• un module de réception d'un message (E20, M1) en provenance dudit terminal, comportant un identifiant du terminal, et
• un module de détection apte à détecter la présence du terminal dans la portée du réseau local sur réception dudit message, et apte à détecter une sortie de la portée du réseau local en cas d'absence de message du terminal pendant un temps défini ;
• un module d'enregistrement (E22) de la donnée (L) de localisation dudit terminal en association avec ledit identifiant (DiD) ;
• un module de réception, en provenance d'un objet connecté du réseau local, d'une requête (E23, M3) de localisation dudit terminal, ladite requête comportant un identifiant dudit terminal (DiD) ;
• un module d'émission (ADSL, WIF) vers l'objet connecté d'un message (E24, M4) comprenant la donnée de localisation (L/D) dudit terminal.

10. Système comprenant un dispositif d'une passerelle de service selon la revendication 9, au moins un objet connecté (3) selon la revendication 8 et un terminal (2) apte à requérir un service de l'objet connecté.

11. Programme d'ordinateur comportant des instructions de code pour la mise en oeuvre du procédé de mise en oeuvre conditionnelle d'un service conforme à la revendication 1, lorsque celle-ci est exécutée par un processeur.

12. Programme d'ordinateur comportant des instructions de code pour la mise en oeuvre du procédé de gestion de la localisation conforme à la revendication 5, lorsque celle-ci est exécutée par un processeur.

## Patentansprüche

1. Verfahren zur an Bedingungen geknüpften Implementierung eines Dienstes (A, B, C) an einem vernetzten Objekt (3) eines lokalen Netzwerks (1), das dazu fähig ist, mit einer Vorrichtung des lokalen Netzwerks, als Standortverwaltungsvorrichtung bezeichnet, eines Gateways des lokalen Netzwerks zu kommunizieren, wobei die Implementierung des Dienstes an dem Objekt mit mindestens einer Standortangabe assoziiert ist, die anzeigt, ob sich ein Endgerät, das den Dienst anfordert, innerhalb der Reichweite des lokalen Netzwerks (L/D) befinden muss, wobei das Verfahren die folgenden Schritte an dem Objekt umfasst:
A. Empfangen (E1) einer Anforderung (M2) nach einer Implementierung des Dienstes von einem Endgerät, wobei die Anforderung mindestens die Kennung des Dienstes (SiD) und eine Kennung des Endgeräts (DiD) umfasst;
B. Übertragen, an die Verwaltungsvorrichtung, einer Anforderung (E3, M3) nach dem Standort des Endgeräts, wobei die Anforderung die Kennung des Endgeräts (DiD) umfasst;
C. Empfangen (E4) einer Antwortnachricht von der Verwaltungsvorrichtung (M4), die mindestens eine Standortangabe des Endgeräts (L/D) umfasst, die anzeigt, ob sich das Endgerät innerhalb der Reichweite des lokalen Netzwerks befindet (L/D);
D. Implementieren (E6) des Dienstes an dem Objekt, wenn die Standortangabe des Endgeräts anzeigt, dass sich das Endgerät innerhalb der Reichweite des lokalen Netzwerks befindet (L/D), und Ablehnen des Implementierens des Dienstes an dem Objekt, wenn die Standortangabe des Endgeräts anzeigt, dass sich das Endgerät nicht innerhalb der Reichweite des lokalen Netzwerks befindet (L/D).

2. Verfahren zur an Bedingungen geknüpften Implementierung eines Dienstes (A) nach Anspruch 1, **dadurch gekennzeichnet, dass** es ferner vor dem Empfangen (E4) einer Nachricht (M4), die mindestens eine Standortangabe des Endgeräts (L/D) umfasst, die folgenden Schritte umfasst:
• Beurteilen (E2) der Standortangabe (L/D), die mit der Implementierung des Dienstes assoziiert ist, und in Abhängigkeit von den Ergebnissen der Beurteilung:
• Übertragen (E3), an die Verwaltungsvorrichtung, der Anforderung (M3) nach dem Standort des Endgeräts (2), die mindestens die Kennung des Endgeräts umfasst.

3. Verfahren zur an Bedingungen geknüpften Implementierung eines Dienstes (A) nach Anspruch 1, **dadurch gekennzeichnet, dass** es ferner die folgenden Schritte umfasst:
• Erfassen (E0) der Standortangabe (L/D), die mit der Implementierung des Dienstes (A) zu assoziieren ist;
• Speichern (E0) der Standortangabe, die mit der Implementierung des Dienstes assoziiert ist.

4. Verfahren zur an Bedingungen geknüpften Implementierung eines Dienstes (A) nach Anspruch 1, **dadurch gekennzeichnet, dass**:
• die empfangene Standortangabe des Endgeräts eine Entfernung des Endgeräts (2) zu einem zweiten Endgerät (6) des lokalen Netzwerks anzeigt;
• die Standortangabe, die mit der Implementierung des Dienstes assoziiert ist, eine maximale Entfernung des Endgeräts (2) zu dem zweiten Endgerät (6) des lokalen Netzwerks anzeigt.

5. Verfahren zur Verwaltung des Standorts eines Endgeräts (2) eines lokalen Netzwerks (1), wobei das Verfahren die folgenden Schritte an einer Vorrichtung des lokalen Netzwerks, als Standortverwaltungsvorrichtung (6) bezeichnet, eines Gateways des lokalen Netzwerks umfasst:
• Erhalten (E21, M1) einer Standortangabe (L/D) des Endgeräts, die anzeigt, ob sich das Endgerät innerhalb der Reichweite des lokalen Netzwerks befindet (L/D), umfassend:
• einen Teilschritt des Empfangens einer Nachricht (E20, M1) von dem Endgerät, die eine Kennung des Endgeräts umfasst, und des Detektierens der Anwesenheit des Endgeräts innerhalb der Reichweite des lokalen Netzwerks bei Empfang der Nachricht (E20, M1);
• einen Teilschritt des Detektierens des Verlassens der Reichweite des lokalen Netzwerks, wenn innerhalb eines definierten Zeitraums keine Nachricht von dem Endgerät empfangen wird;
• Speichern (E22) der Standortangabe (L/D) des Endgeräts zusammen mit der Kennung (DiD);
• Empfangen, von einem vernetzten Objekt des lokalen Netzwerks, einer Anforderung (E23, M3) nach dem Standort des Endgeräts, wobei die Anforderung eine Kennung des Endgeräts (DiD) umfasst;
• Senden, an das vernetzte Objekt, einer Antwort (E24, M4), die die Standortangabe des Endgeräts beinhaltet.

6. Verfahren zur Verwaltung des Standorts nach Anspruch 5, **dadurch gekennzeichnet, dass** die Nachricht (M1) über einen von dem lokalen Netzwerk getrennten Kanal übertragen wird.

7. Verfahren zur Verwaltung des Standorts nach Anspruch 5, **dadurch gekennzeichnet, dass** die Standortangabe des Endgeräts (L/D) eine Entfernung zwischen dem Endgerät und der Standortverwaltungsvorrichtung anzeigt.

8. Vernetztes Objekt (3, 4) eines lokalen Netzwerks (1), das dazu fähig ist, mit einer Vorrichtung des lokalen Netzwerks, als Standortverwaltungsvorrichtung bezeichnet, eines Gateways des lokalen Netzwerks zu kommunizieren und, an Bedingungen geknüpft, einen Dienst (A, B, C) zu implementieren, wobei die Implementierung des Dienstes an dem Objekt mit mindestens einer Standortangabe (L/D) assoziiert ist, die anzeigt, ob sich ein Endgerät, das den Dienst anfordert, innerhalb der Reichweite des lokalen Netzwerks befinden muss, wobei das Objekt die folgenden Module beinhaltet:
• ein Modul zum Empfangen (3G, ADSL, WIF) einer Anforderung (M2) nach einer Implementierung des Dienstes von einem Endgerät (2), wobei die Anforderung mindestens die Kennung des Dienstes (SiD) und eine Kennung des Endgeräts (DiD) umfasst;
• ein Modul zum Übertragen, an die Verwaltungsvorrichtung, einer Anforderung (M3) nach dem Standort des Endgeräts, wobei die Anforderung die Kennung des Endgeräts (DiD) umfasst;
• ein Modul zum Empfangen (WIF) einer Antwortnachricht (M4) von der Verwaltungsvorrichtung, die mindestens eine Standortangabe des Endgeräts (L/D) umfasst, die anzeigt, ob sich das Endgerät innerhalb der Reichweite des lokalen Netzwerks befindet (L/D);
• ein Modul zum Implementieren (MR) des Dienstes an dem Objekt, wenn die Standortangabe des Endgeräts anzeigt, dass sich das Endgerät innerhalb der Reichweite des lokalen Netzwerks befindet (L/D), und zum Ablehnen des Implementierens des Dienstes an dem Objekt, wenn die Standortangabe des Endgeräts anzeigt, dass sich das Endgerät nicht innerhalb der Reichweite des lokalen Netzwerks befindet (L/D).

9. Vorrichtung (6) eines Dienst-Gateways eines lokalen Netzwerks für die Verwaltung des Standorts eines Endgeräts in dem lokalen Netzwerk (1), wobei die Vorrichtung Folgendes umfasst:
• ein Modul zum Erhalten (ADSL, WIF, BT, MEM) einer Standortangabe (L) eines Endgeräts, die anzeigt, ob sich das Endgerät innerhalb der Reichweite des lokalen Netzwerks befindet (L/D), umfassend:
• ein Modul zum Empfangen einer Nachricht (E20, M1) von dem Endgerät, die eine Kennung des Endgeräts umfasst, und
• ein Detektionsmodul, das dazu fähig ist, bei Empfang der Nachricht die Anwesenheit des Endgeräts innerhalb der Reichweite des lokalen Netzwerks zu detektieren, und dazu fähig ist, bei fehlender Nachricht des Endgeräts während eines definierten Zeitraums ein Verlassen der Reichweite des lokalen Netzwerks zu detektieren;
• ein Modul zum Speichern (E22) der Standortangabe (L) des Endgeräts zusammen mit der Kennung (DiD);
• ein Modul zum Empfangen, von einem vernetzten Objekt des lokalen Netzwerks, einer Anforderung (E23, M3) nach dem Standort des Endgeräts, wobei die Anforderung eine Kennung des Endgeräts (DiD) umfasst;
• ein Modul zum Senden (ADSL, WIF), an das vernetzte Objekt, einer Nachricht (E24, M4), die die Standortangabe (L/D) des Endgeräts beinhaltet.

10. System, das eine Vorrichtung eines Dienst-Gateways nach Anspruch 9, mindestens ein vernetztes Objekt (3) nach Anspruch 8 und ein Endgerät (2), das dazu fähig ist, einen Dienst des vernetzten Objekts anzufordern, beinhaltet.

11. Computerprogramm, das Codeanweisungen zur Implementierung des Verfahrens zur an Bedingungen geknüpften Implementierung eines Dienstes gemäß Anspruch 1 umfasst, wenn diese durch einen Prozessor ausgeführt werden.

12. Computerprogramm, das Codeanweisungen zur Implementierung des Verfahrens zur Verwaltung des Standorts gemäß Anspruch 5 umfasst, wenn diese durch einen Prozessor ausgeführt werden.

## Claims

1. Method for conditionally implementing a service (A, B, C) on a connected object (3) in a local network (1) able to communicate with a device in the local network, referred to as the device for managing the location of a gateway in said local network, implementing said service being associated, on said object, with at least one location datum indicating whether a terminal requiring the service should be in the range of the local network (L/D), the method comprising the following steps on the object:
A. receiving (E1) a request (M2) to implement the service originating from a terminal, said request comprising at least the identifier of the service (SiD) and an identifier of said terminal (DiD);
B. transmitting, to the management device, a request (E3, M3) to locate said terminal, said request comprising said identifier of the terminal (DiD);
C. receiving (E4) a message in response from the management device (M4) comprising at least one location datum for the terminal (L/D) indicating whether the terminal is present (L/D) in the range of the local network;
D. implementing (E6) the service on the object if said location datum for the terminal indicates that the terminal is present (L/D) in the range of the local network, and refusing to implement the service on the object if said location datum for the terminal indicates that the terminal is not present (L/D) in the range of the local network.

2. Method for conditionally implementing a service (A) according to Claim 1, **characterized in that** it further comprises, before a message (M4) comprising at least one location datum for the terminal (L/D) is received (E4), the steps of:
• evaluating (E2) the location datum (L/D) associated with implementing the service and, according to the results of the evaluation:
• transmitting (E3), to the management device, the request (M3) to locate the terminal (2), comprising at least said identifier of said terminal.

3. Method for conditionally implementing a service (A) according to Claim 1, **characterized in that** it further comprises the following steps:
• acquiring (E0) the location datum (L/D) to be associated with implementing the service (A);
• storing (E0) the location datum (L/D) associated with implementing the service.

4. Method for conditionally implementing a service (A) according to Claim 1, **characterized in that**:
• the received location datum for the terminal indicates a distance from the terminal (2) to a second terminal (6) in the local network;
• the location datum associated with implementing the service indicates a maximum distance from said terminal (2) to said second terminal (6) in the local network.

5. Method for managing the location of a terminal (2) in a local network (1), the method comprising the following steps on a device in the local network, referred to as the location management device (6), of a gateway in said local network:
• obtaining (E21, M1) a location datum (L/D) for said terminal indicating whether the terminal is present (L/D) in the range of the local network, comprising:
• a substep of receiving a message (E20, M1) originating from said terminal, comprising an identifier of the terminal, and of detecting the presence of the terminal in the range of the local network when the message (E20, M1) is received; or
• a substep of detecting an exit from the range of the local network in the event of a message not being received from the terminal during a defined time;
• storing (E22) the location datum (L/D) for said terminal in association with said identifier (DiD);
• receiving, from a connected object in the local network, a request (E23, M3) to locate said terminal, said request comprising an identifier of the terminal (DiD);
• sending, to the connected object, a response (E24, M4) comprising the location datum for said terminal.

6. Location management method according to Claim 5, **characterized in that** said message (M1) is broadcast over a channel distinct from the local network.

7. Location management method according to Claim 5, **characterized in that** the location datum for the terminal (L/D) indicates a distance between the terminal and the location management device.

8. Connected object (3, 4) in a local network (1) able to communicate with a device in the local network, referred to as the location management device, of a gateway in said local network, and to conditionally implement a service (A, B, C), implementing said service being associated, on said object, with at least one location datum (L/D) indicating whether a terminal requiring the service should be in the range of the local network, said object comprising the following modules:
• a module for receiving (3G, ADSL, WIF) a request (M2) to implement the service originating from a terminal (2), said request comprising at least the identifier of the service (SiD) and an identifier of said terminal (DiD);
• a module for transmitting, to the management device, a request (M3) to locate said terminal, said request comprising said identifier of the terminal (DiD);
• a module for receiving (WIF) a message (M4) in response from the management device, comprising at least one location datum for said terminal (L/D) indicating whether the terminal is present (L/D) in the range of the local network;
• a module for implementing (MR) the service on the object if said location datum for the terminal indicates that the terminal is present (L/D) in the range of the local network, and for refusing to implement the service on the object if said location datum for the terminal indicates that the terminal is not present (L/D) in the range of the local network.

9. Device (6) of a service gateway in a local network, for managing the location of a terminal in the local network (1), said device comprising:
• a module for obtaining (ADSL, WIF, BT, MEM) a location datum (L) for a terminal indicating whether the terminal is present (L/D) in the range of the local network, comprising:
• a module for receiving a message (E20, M1) originating from said terminal, comprising an identifier of the terminal, and
• a detection module able to detect the presence of the terminal in the range of the local network when said message is received, and able to detect an exit from the range of the local network in the event of no message from the terminal during a defined time;
• a module for storing (E22) the location datum (L) for said terminal in association with said identifier (DiD);
• a module for receiving, from a connected object in the local network, a request (E23, M3) to locate said terminal, said request comprising an identifier of said terminal (DiD);
• a module for sending (ADSL, WIF), to the connected object, a message (E24, M4) comprising the location datum (L/D) for said terminal.

10. System comprising a device of a service gateway according to Claim 9, at least one connected object (3) according to Claim 8 and a terminal (2) able to request a service of the connected object.

11. Computer program comprising code instructions for implementing the method for conditionally implementing a service according to Claim 1, when the latter are executed by a processor.

12. Computer program comprising code instructions for implementing the location management method according to Claim 5, when the latter are executed by a processor.
